**Europäisches Patentamt**

**European Patent Office**

**Office européen des brevets**

(19)

(11) **EP 1 587 265 A1**

(12) **EUROPEAN PATENT APPLICATION**

(43) Date of publication:
**19.10.2005 Bulletin 2005/42**

(51) Int Cl.⁷: **H04L 25/03**

(21) Application number: **04360002.2**

(22) Date of filing: **15.01.2004**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | (72) Inventors:<br>• **Haslach, Christoph, Dr.**<br>**70176 Stuttgart (DE)**<br>• **Chiarotto, Andrea**<br>**33083 Chions (IT)** |
| (71) Applicant: **ALCATEL**<br>**75008 Paris (FR)** | (74) Representative: **Kohler Schmid Möbus**<br>**Patentanwälte**<br>**Ruppmannstrasse 27**<br>**70565 Stuttgart (DE)** |

(54) **Detection of error propagation for decision feedback equalisation**

(57)    This invention relates to a method for identifying a faulty (errored) bit sequence, having a beginning and an end, in a received signal sequence and a decision feedback equalizer (DFE) for identifying an errored bit sequence according to the method. The method is comprising the steps of detecting an amplitude of each received signal of the signal sequence and decision feedback equalization by establishing a compensated signal by subtracting an amplitudevalue of a previous received signal of said signal sequence from the amplitude of a currently received signal of said signal sequence, and making a decision whether a value of the currently received signal of said signal sequence is a high or low bit value according to the amplitude of said compensated signal, wherein the amplitude of the compensated signal is identified as being an undershot or overshot amplitude and the beginning of the errored bit sequence is identified as a received signal, whose compensated signal is having an undershot amplitude and the end of the errored bit sequence is identified as a received signal, whose compensated signal is having an overshot amplitude.

Fig. 1

EP 1 587 265 A1

## EP 1 587 265 A1

**Description**

This invention relates to a method for identifying a faulty (errored) bit sequence, having a beginning and an end, in a received signal sequence and a decision feedback equalizer (DFE) for identifying an errored bit sequence according to the method. The method is comprising the steps of detecting an amplitude of each received signal of the signal sequence and decision feedback equalization by establishing a compensated signal by subtracting an amplitudevalue of a previous_received signal of said signal sequence from the amplitude of a currently received signal of said signal sequence, and making a decision whether a value of the currently received signal of said signal sequence is a high or low bit value according to the amplitude of said compensated signal. The method is a postprocessing for a DFE for a processing of distorted signals. It can be used to mitigate transmission impairments and/or to improve a link budget.

Due to dispersion effects, adjacent bits can overlap in a received optical signal so that an actual bit value is a superposition of the actual bit value and the previous bit value, i.e., $\delta(t)+\delta(t-T)$. A known method of processing a received optical signal is decision feedback equalization, which shows very good performance. The principle of DFE is to subtract the previously detected bit value from the actual bit value before detection. A problem with DFE is error propagation in the receiver, i.e., if a wrong bit value has been detected and after that is subtracted from the next bit value, the latter would become wrong as well. The error would promulgate until two equal bit values ,i.e. 11 or 00, occur in the input signal (received signal sequence).

According to the state of the art there are several solutions to mitigate transmission impairments:

- A Linear Equalizer (LE), having medium performance,
- Standart DFE as described above, having better performance than LE,
- Maximum Likelihood and near maximum likelihood approaches, e.g. a Viterbi algorithm, having excellent performance but high complexity, leading to very high implemention effort.

Bergmans, Gudmanson & Dahlman (Bergmans) are teaching a DFE with two parallel DFE-circuits with slightly different thresholds and a soft decision circuit in "J.W.M. Bergmans et al; "Dual Decision Feedback Equalizer", IEEE Transactions on Communication s, Vol.45, no 45, may 1997" and "J.W.M. Bergmans et al; "Dual Decision Feedback Equalizer with variable detection delay", Electronic Letters, Vol.36, no 5, march 2000". Based on an estimation of the reliability of each of the two output signals of the circuits, the better one of these is selected. This DFE requires two DFEs and a complex evaluation circuit. The principle idea of Bergmans is to use two parallel DFE-circuits (paths) and a soft decision block. E.g. the two paths have slightly different decision thresholds, resulting in, the fact that if unreliable decision is performed, one path might detect the bit value "1", the other one might detect the bit value "0". If this happens, the detected bit sequence of each path can be considered as two hypothesis: the bit sequence that is detected when the uncertain bit was "0" or "1" respectively. The most reliable path is selected according to a measure for the reliability of the detected sequences, which is achieved by summing up the outputs of a special block of a circuit, which is part of a DFE working according to Bergmans algorithm. Disadvantages of Bergmans DFE are that it requires two standard DFE-circuits and a circuit operating according to a complex arithmetic, comprising a square operation.

The performance of LE and standard DFE is significantly worse than the performance of Maximum Likelihood and near maximum likelihood approaches, e.g. a Viterbi algorithm. The letter ones require enormous effort for implementation. The implementation is not feasible for High Speed Data transmission, e.g. 10 Gbit/s.

It is therefore an object of the invention to provide a method for identifying an errored bit sequence, a method for mitigating a distorted optical signal and a decision feedback equalizer for carrying out the steps of the methods which overcome the problems associated with the related art, in particular which can be used for High Speed Data transmission.

The object concerning a method for identifying an errored bit sequence is attained by the method according to claim 1. The object concerning the decision feedback equalizer for identifying an errored bit sequence is attained by the decision feedback equalizer as set forth in claim 6.

Further advantageous features of the invention are defined in the depending claims.

The inventive method is based on the idea to detect the beginning and the end of a potentially errored-bit sequence and to invert the sequence to correct the error if the bit values at the beginning and the end of the errored sequence show suspicious behavior. The bit sequence is inverted if a correction is to be set forth. It is based on a standard DFE and performs a postprocessing on the output signal of the standard DFE. The inventive method is based on the observation that when a bit error occurs in a standard DFE, an error propagation can be observed. The error propagation ends at a bit sequence of two bits having the same value.

The inventive method for identifying an errored bit sequence, having a beginning and an end, in a received signal sequence, is comprising the steps of:

- detecting an amplitude of each received signal of the signal sequence and decision feedback equalization by
- establishing a compensated signal by subtracting an amplitudevalue of a previous received signal of said signal sequence from the amplitude of a currently received signal of said signal sequence, and
- making a decision whether a value of the currently received signal of said signal sequence is a high or low bit value according to the amplitude of said compensated signal.

According to the invention the amplitude of the compensated signal is identified as being an undershot or overshot amplitude and

the beginning of the errored bit sequence is identified as a received signal, whose compensated signal is having an undershot amplitude and the end of the errored bit sequence is identified as a received signal, whose compensated signal is having an overshot amplitude.

Between undershot amplitude and overshot amplitude (including the bits belonging to undershot and overshot amplitude) there has to be an alternating bit sequence to prove that the bit sequence between undershot and overshot is errored. To be sure that an errored bit sequence has been detected, the detection of an alternating bit sequence between undershot and overshot amplitude is crucial. The amplitudevalue of the previous received signal may be the detected amplitude of the signal itself or it may be the amplitude of the signal multiplied with another amplitude, i.e. weighted with a weightfunktion. The amplitudevalue is depending from properties, for example the channel impulse response, of the transmission channel which is used to transmit the received signal sequence.

The inventive method results at least in the following advantages:

- An improved performance compared to DFE according to the state of the art is achieved.
- The method can be used in an implementation of a DFE for high speed data processing.
- The method is less complex than a Viterbi algorithm or Bergmans DFE.
- The inventive method enables an improved distortion mitigation for high speed data transmission, having moderate complexity, meaning only a little higher complexity than standard decision feedback equalization, without any postprocessing.

Preferably, said identifying of the amplitude of the compensated signal as being an undershot or overshot amplitude is done by comparing the amplitude to at least one, preferably adjustable, threshold. In general, any threshold and/or e.g. multiplication factor used to implement the invention should be adjustable.

Preferably, said received signal sequence is comprising optical signals.

Preferably, the inventive method is used together with a method for mitigating a distorted optical signal, wherein, after the steps of the inventive method have been performed, the errored bit sequence is replaced by a corrected bit sequence, wherein the corrected bit sequence is obtained by inverting the errored bit sequence.

Preferably, the method for mitigating a distorted optical signal is used in high speed data processing.

The inventive decision feedback equalizer for identifying an errored bit sequence, having a beginning and an end, in a received signal sequence, is comprising

- detection means, designed to detect an amplitude of each received signal of the signal sequence and
- decision feedback equalization means, comprising

  - subtracting means, being designed to establish a compensated signal by subtracting an amplitudevalue of a previous received signal of said signal sequence from the amplitude of a currently received signal of said signal sequence, and
  - decision means, being designed to make a decision whether a value of the currently received signal of said signal sequence is a high or low bit value according to the amplitude of said compensated signal.

According to the invention, postprocessing means are provided, comprising

- amplitude identifying means, being designed to identify the amplitude of the compensated signal as being an undershot or overshot amplitude and
- errored bit sequence identifying means, being designed to identify the beginning of the errored bit sequence as a received signal, whose compensated signal is having an undershot amplitude and the end of the errored bit sequence as a received signal, whose compensated signal is having an overshot amplitude. The inventive DFE offers the possibility to achieve the advantages of the inventive method.

Preferably, the postprocessing means of the inventive decision feedback equalizer are comprising mitigating means, comprising replacing means being designed to replace the errored bit sequence by a corrected bit sequence, and inverting means, being designed to establish the corrected bit sequence by inverting the errored bit sequence.

The amplitude identifying means of the inventive decision feedback equalizer preferably are comprising means designed to provide information on the received signal, preferably a monitor flipflop. The monitor flipflop is only one way to provide information for a controlling mechanism of thresholds and multiplication factors. Any means that provide information on a signal distortion of the received signal sequence or on its bit error rate can be used instead of the monitor flipflop, e.g. a forward error correction device.

The replacing means of the inventive decision feedback equalizer preferably are comprising delay circuits. This embodiment leads to a simple implementation of the mitigation means.

The inventive decision feedback equalizer preferably is comprising a microcomputer loaded with a computer program with software code sections by which the steps of the inventive method are carried out.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawings.

In fig. 1 an example of a received signal sequence is shown schematically.

In fig. 2 the range of values of the compensated signal of a DFE is shown.

In fig. 3a a DFE-circuit according to the invention is shown schematically.

In fig. 3b a DFE-circuit according to the invention having one more delay device than the circuit shown in fig. 3a is shown schematically,

The figs. 3c to 3h are showing different functional parts of the circuits shown in fig. 3a and 3b, wherein fig. 3c is showing a standard DFE according to the state of the art.

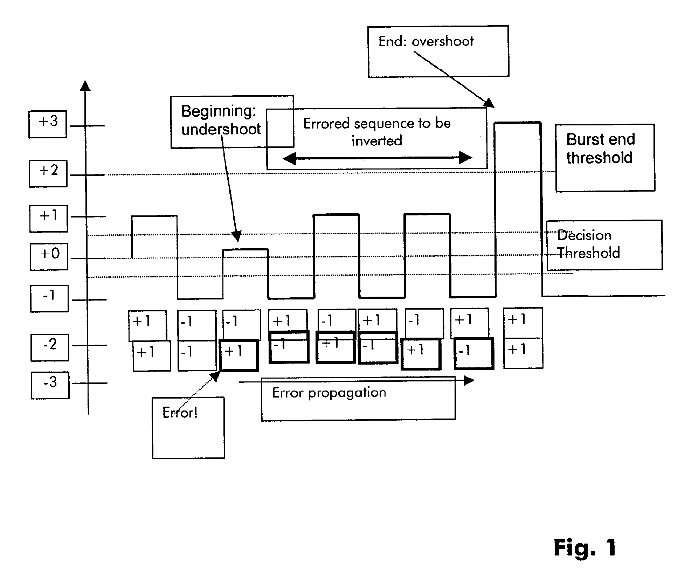

In fig 1 an example of a received signal sequence is shown schematically to explain the underlying principles of the inventive method. The basic starting point of the principle, which is underlying the inventive method is, for instance, a distortion resulting from the fact that the currently sent bit, received from a receiver and the previously sent bit are additively superposed at the receiver. The channel impulse response is $\delta(t)+\delta(t-T)$. This situation is equivalent to an optical transmission, having a polarization mode dispersion (PMD) with parameters gamma = 0.5 and DGD = 1 UI. Here the bits are having values of +1 or -1.

The function of a standard DFE is that the DFE subtracts the previously detected bit (DET) from the currently received value in order to compensate the distortion caused by superposing of the sent bits, i.e. if a bit has been decided, it is subtracted as FEEDBACK from the currently received value. In our case FEEDBACK (FB) being the inverted detected bit sequence. Bit detection is carried out with a compensated signal (COM): if COM>0 -> DET=+1

COM<0 -> DET=-1

for example

| sent sequence | +1 +1 +1 +1 +1 −1 +1 -1 +1 +1 |
| received sequence | +2 +2 +2 +2 0 0 0 0 +2 |
| + Feedback | -1 −1 -1 -1 -1 +1 -1 +1 -1 |
| ------------------------------------------------------------------------------- | |
| Result of REC+FB =COM | +1 +1 +1 +1 −1 +1 −1 +1 +1 |
| ------------------------------------------------------------------------------- | |
| DET | +1 +1 +1 +1 +1 −1 +1 -1 +1 +1 |

A problem is that if a bit is being decoded defectively, e.g. because of noise, the feedback signal will be wrong and will result in an error propagation, leading to a situation that the detected bit sequence will be equivalent to the inverted sent sequence, as shown in an example below.

It can be observed that the error propagation ends exactly when +1 +1 or -1 -1 is sent. A distinctive feature is that the end of the error propagation can be recognized in COM = REC + FB as a overshooting signal (overshot), having the amplitude +3 or -3 in the example.

For example in the previous example a bit error at the decider is inserted by a high noise amplitude, having the amplitude value 1.1. The result is the inverted Feedback, having the underlined bit values. In the Result of REC - FB an overshot at the end of the error propagation, having the bit value +3 can be seen. From this point, meaning the bit value +3, onwards the distortion of the sequence is correctly mitigated.
The resulting faulty bit sequence is underlined in the detected bit sequence (DET) as shown.

```
sent sequence          +1 +1 +1 +1 +1 −1 +1 -1 +1  +1  +1

received sequence         +2 +2 +2 +2  0   0 0  0 +2 +2

+ Feedback             -1 −1  -1  -1  +1   -1 +1 -1 +1  -1

+noise              0   0 0  0  -1.1 0  0  0  0  0  0

-------------------------------------------------------------------------

Result of REC-FB          +1 +1 +1 −0.1 +1 -1 +1 -1 +3 +1

-------------------------------------------------------------------------

DET                1 +1 +1 +1 -1 +1 -1 +1 -1  +1  +1 +1
```

This observations are leading to the basic idea of the inventive method, which is to recognize the starting point of the error propagation by low signal amplitude, e.g. -0.1, and to recognize the end of the error propagation by the overshot, e.g. +3 or -3.

To mitigate the distorted bit sequence the faulty bit sequence between the beginning and the end of the error propagation has to be inverted if the bit sequence in between has the following structure: alternating +1 and -1, at the end finally +1 +1 or -1 -1.

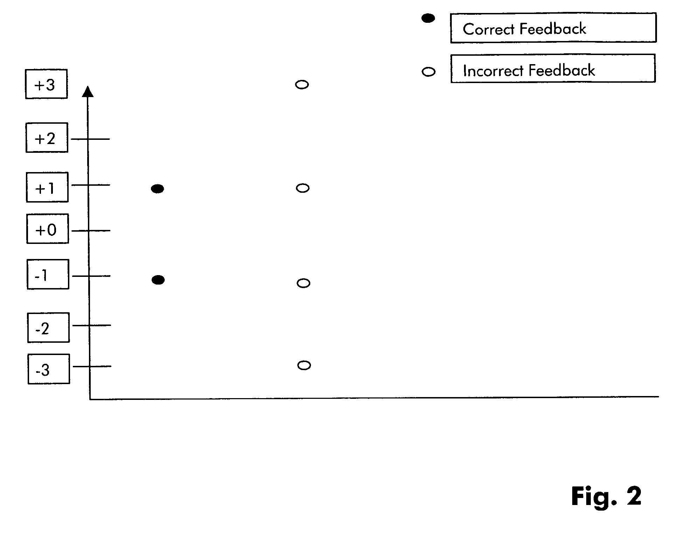

In fig. 2 the range of values of the compensated signal of a DFE is shown. One of the underlying principles of the invention is the fact that if there is an incorrect feedback, overshot bit values having the amplitude +3 or -3 are occurring.

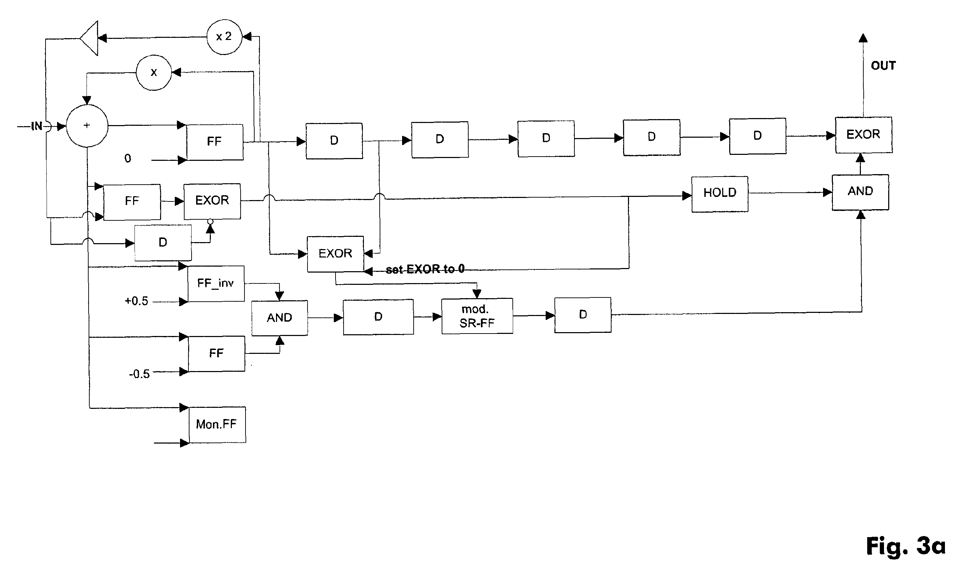

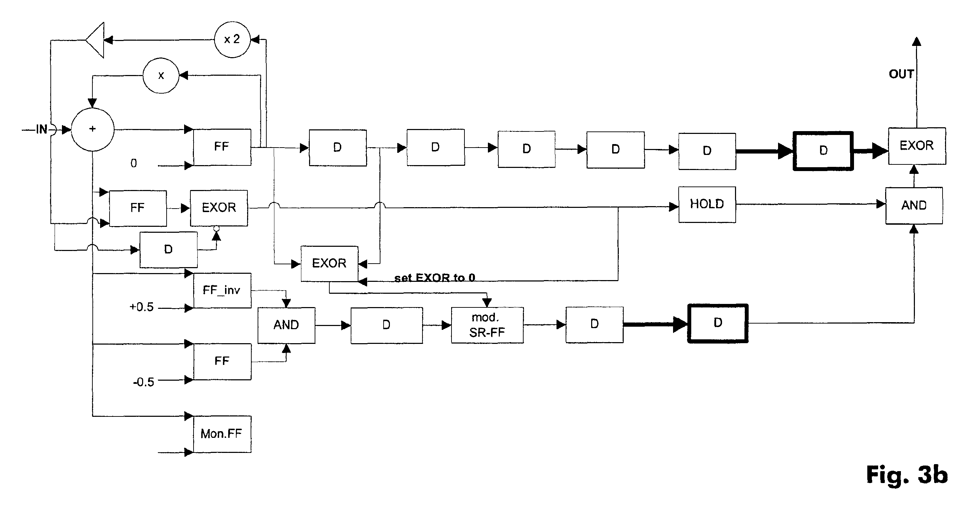

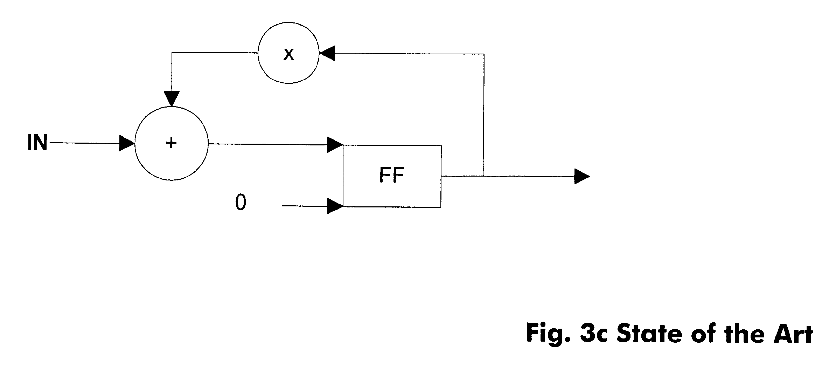

In the figures 3a and 3b block diagrams of circuits are shown, whose function is the detection of the sequences with the following structure: "low signal amplitude - then alternating bit pattern and finally large signal amplitude."
In addition: delay of the relevant signal in order to permit later correction of the sequence which has been recognized as being defective (errored).
The circuit can be dissected into several parts shown in the figs. 3c to 3h, having the following functions:

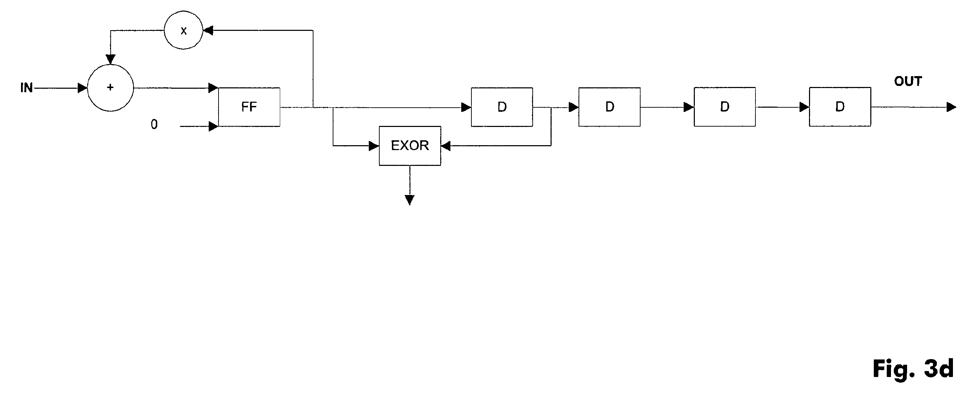

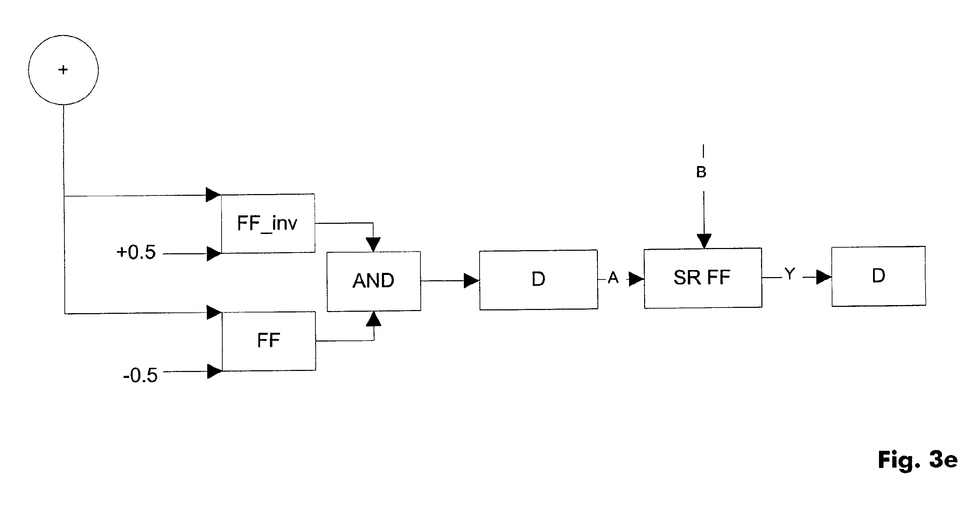

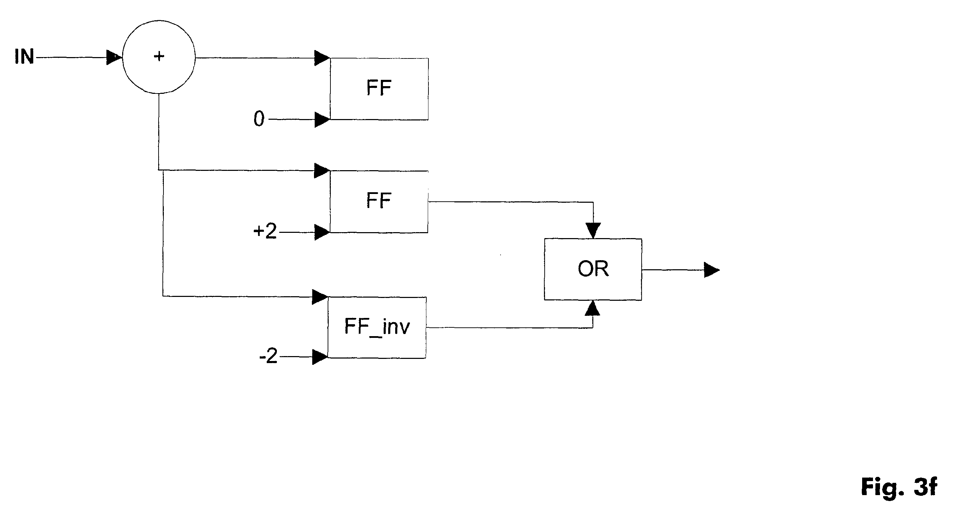

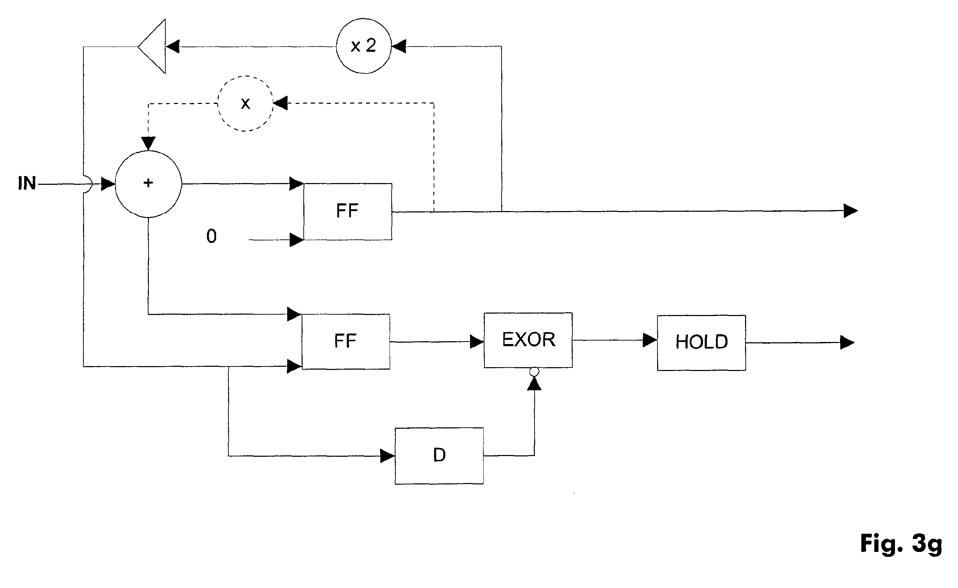

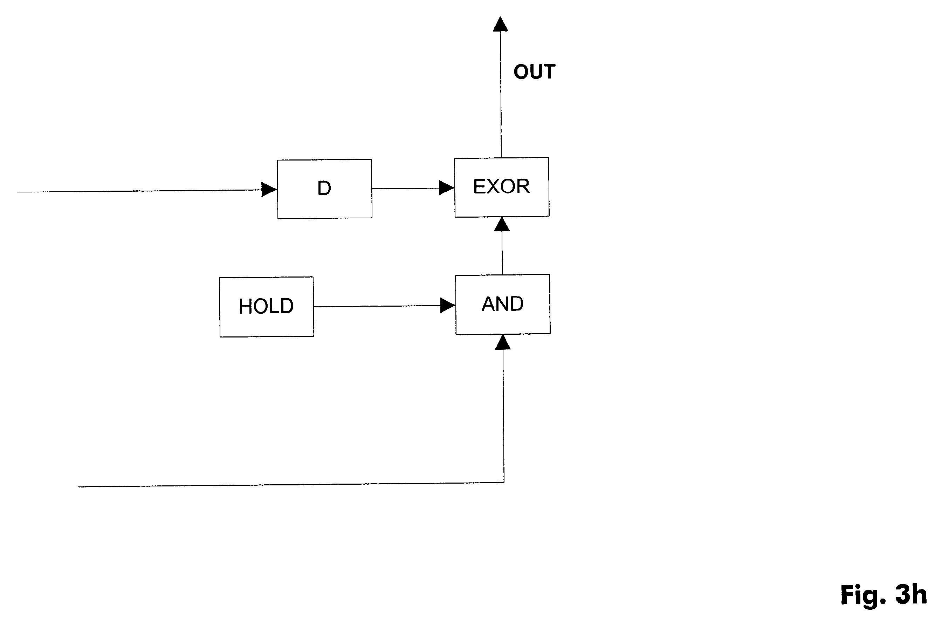

1) standard Decision Feedback Equalizer (DFE) according to the state of the art (fig. 3c);
2) detection of an alternating sequence of bits (fig. 3d);
3) detection of the low signal amplitude at the beginning of the error propagation (fig. 3e);
4) detection of the overshot at the end of the error propagation (fig. 3f and 3g) and
5) correction of the errored sequence (fig. 3h).

The shown circuit is designed to detect and correct error sequences of length 1 and 2. These possess one of the following structures, wherein 0.1 is representing low amplitude and 3.0 is representing an overshot:

+0.1 -3.0

-0.1 +3.0

+0.1 -1.0 +3.0

-0.1 +1.0 -3.0

As general annotations it is to be clear that:

The used parameters, e.g. decision thresholds of the flipflops between erasure thresholds at +0.5, -0.5, +2.0, -2.0, depend on the actually existing distortions, hissing statistics, signal levels etc. In real systems, these have to be regulated and be able to adjust to changing distortions. For this purpose, a monitor flipflop called "Mon.FF" is introduced. Thus, measuring a shown diagram of the receiving signal, e.g. via a so-called "Pseudo Error Monitor" method is made possible. The Monitor FF is a normal decision flipflop. The output can be used for statistic analysis of the signal by changing the threshold and the scanning phase. This monitor flipflop is not part of the "basic idea" of the "Enhanced DFE" according to the invention; its aim is just to provide an interface for adjusting parameters as thresholds. Another possibility to adjust used parameters is to analyze the bit error rate of the signal sequence after it has passed the decision logic at the output, e.g. of the circuit shown in fig. 3a. This may be done by analyzing the signal sequence with a decoder using forward error correcting codes (FEC). In this case the inventive decision feedback equalizer, i.e. for example the circuit shown in fig. 3a, may be followed by a Forward Error Correcting Code device. The block diagrams as shown are just one of several possibilities for implementing the idea of the inventive DFE. At this implementation the maximum length of an error sequence can be limited. In case of the block diagram shown in figure 3a the length is two. This limitation can be relaxed at minimal effort by inserting additional delay devices (D) onto the path of the decided bits and onto the path after the modified Set-Reset-Flipflop (SR-FF). Fig. 3b shows the extended circuit for error sequences of length three. The two delay devices in bold print frames have been additionally inserted. Furthermore, the "Hold" parameter of the "Hold" block is increased to three. Apart from that, nothing else has been changed at the circuit according to fig. 3a.

In practice, it might be sufficient to correct error propagation up to a length of three or four bits, as the occurrence probability of the error propagation decreases exponentially with the length of the error sequence. This is especially true for transmission systems using the Forward Error Correction (FEC). In this case, there are higher error rates of a bit sequence and correction of error bit sequences having length one or two may lead to achieving a considerable increase in sensitivity.

The DFE for mitigating a distorted optical signal as shown is comprising a detector circuit for deciding whether the received signal value is a high or low bit value and a feedback loop for subtracting a delayed detected signal from a received signal before decision, as a DFE according to the state of the art. Furthermore in an inventive DFE the circuit is comprising a signal amplitude monitor for detecting overshots and undershots in the signal amplitude and an inversion circuit for inverting an alternating bit sequence between an undershot and an overshot. The inversion circuit is a preferred embodiment to replace the errored bit sequence with a corrected one. A potentially errored sequence is characterized by an overshot in the amplitude spectrum of the mitigated signal, while the beginning of a potentially errored sequence is characterized by a very low signal amplitude. If an alternating signal, meaning a sequence of bits as 10101010, is found between these two suspicious values (overshot and undershot), it can be assumed that the signal is indeed errored and the error then is corrected by inverting the wrong bit sequence.

The best performance of the inventive method is achieved when the channel impulse response (h) is smaller than two bits, preferably when the channel impulse response $h(t) = \delta(t) + \delta(t-T)$, wherein T is the bit duration.

In fig. 3c a standard DFE is shown. The Incoming signal (received signal sequence) (IN) moves to the decision flipflop (FF). The decided bit (+1/-1) is being coupled back and multiplied by a weighting factor, shown as a circle marked "X", i.e. the circle symbolizes a multiplier, which adjusts the amplitude value of a previous received signal, in dependence of a given distortion, before the signal is being subtracted from the amplitude of a currently received signal. This signal is then added to the input signal. According to state of the art, at this place often a subtraction is performed. According to the invention, a negative weighting factor is used, leading to an addition. The decision threshold is at "0".

In fig. 3c a block diagram for the detection of an alternating bit sequence is shown. The decided sequence is examined for alternating bit sequences making use of the "EXOR" block. The blocks marked "D" are delay devices (D) which may be comprising flipflops. In this case, it should be noted that the entry signals of these flipflops are already decided data signals, i.e. these flipflops can be dimensioned in a very low power-consumption way and are easy to implement. Decided bits are being stored in the delay devices, e.g. a shift register, thus enabling a later correction in case the typical pattern of an error sequence will be detected. If any alternating bit sequence follows the decision flipflop, i.e. is presented from the flipflop to the "EXOR" device, the output of the "EXOR" will be "+1"; otherwise it will be "-1".

In fig. 3d a block diagram for the detection of the low signal amplitude at the beginning of the error propagation is shown. The output of block "FF" results in "+1" if the incoming signal has an amplitude higher than "-0.5". The block marked "FF_ inv" (inverting flipflop (FF_inv)) is an inverting flipflop which results in "+1" if the incoming signal is lower than "+0.5". This results in that at the output of the "AND" block "+1" will show if the signal amplitude varies between -0.5 and +0.5. The function of the delay device (D) is that the information about a low amplitude is being synchronized with the information about the alternating bit sequence of the EXOR gate. The function of the modified Set-Reset-Flip-Flop (SRFF) block is, that in contrast to the usual meaning of a Set-Reset-Flip-Flop, the modified SRFF is understood as a circuit element comprising the following functions:

1. case: $B(k)=-1 \rightarrow Y(k)=-1$ for $A(k)=-1$ or $A(k)=+1$

2. case: B(k)=+1 → Y(k)=+1 if A(k)=+1;

   Y(k)=+1 if A(k)=-1 and also Y(k-1)=+1

   Y(k)= -1 if A(k)=-1 and also Y(k-1 )=+1;

wherein A(k) and B(k) are the inputs (A,B) and Y(k) is the output (Y) of the modified SRFF, k being the number of the actual bit, which is processed. Meaning that e.g. the output will be "+1" if A and B simultaneously are "+1". The value "+1" at the output will be repeated until "B=-1". Then, "-1" will again be found at the output for as long as A and B will simultaneously be "+1".

The modified SR-FF can be shown as a standard SR-FF with modified inputs:

$$A \rightarrow B \land A$$

$$B \rightarrow inv(B)$$

The value table of the modified SR-FF is:

| A(k) | B(k) | | Y(k) | |
|------|------|---|------|---|
| -1 | -1 | \| | -1 | 'Reset' |
| -1 | +1 | \| | -1 | 'Reset' |
| +1 | +1 | \| | +1 | 'Set' |
| +1 | -1 | \| | Y(k-1) | 'Hold' |

'+1' at the output of the modified SR-FF signals an alternating bit sequence with a low signal amplitude at its beginning, meaning the first bit has a low amplitude as its value.

In fig. 3e a block diagram of a principle circuit detecting an overshot is shown. This principle circuit is not used in the circuits shown in the figs 3a and 3b. Instead of the principle circuit according to the block diagram shown in fig. 3f an extension of the DFE for the detection of the overshot at the end of the error propagation is used. Overshots can be detected by flipflops having a respective decision threshold (+2/-2). "+1" at the output of the "OR" block shows that a signal higher than "+2" or lower than "-2" has occurred, which is a possible end of error propagation. This, however, leads to neglecting a further condition at the end of the error propagation: the bit previous to a positive overshot has a value "-1", previous to a negative overshot "+1". The detection is carried out by back-coupling the decided bit as a decision threshold for the overshot detection. Before, the bit has been multiplied by "2", as shown in circle "X2" in figure 3a, 3b and 3f, and inverted by an inverter. Thus, the following structure of the block diagram shown in fig 3f emerges. A further advantage of this structure is that one decision flipflop less is needed.

If there is a "-2" as threshold, the flipflop will have to work as an inverting fipflop. This problem can be solved by a following "EXOR" with inverting input after a flipflop, as shown in fig. 3f. The block "Hold" repeats "+1" at the output for several times if "+1" is at the input, in the example for 2 times. The lower input, marked "0" of the flipflop is the input of the decision threshold.

If an overshot is being detected, this information will also be used to finish an alternating bit sequence that may have been detected. This is accomplished in the following way: the reset-entry of the "EXOR" block, which is marked as "set EXOR to 0" in figure 3a and/or 3b, for detecting alternating bit patterns is being linked to the "overshot" signal. If there is "+1" at this input, the "EXOR" block will put out "-1" at the output, regardless of the values of the other "EXOR" inputs. An introduction of the EXOR gate in the overshot detection makes the delay device previous to the reset input of the EXOR gate of the original circuit superfluous.

In fig 3h the part of the block diagrams shown in figs 3a and 3b, which corrects the errored bit sequence is shown. The information about an alternating bit pattern, with low signal altitude at the beginning of a bit sequence and the information about an overshot is combined at the "AND", resulting in a value "+" at the output of the "AND" in case there is an alternating sequence with a low starting amplitude as well as an overshot afterwards. If value "+1" of the "AND" block fits tightly to the following "EXOR" block, this will lead to an inversion of the data sequence at the other input of the EXOR. If the output of the "AND" has a value "-1", there will be no change in the data sequence at the other input of the EX-OR.

**Claims**

1. A method for identifying an errored bit sequence, having a beginning and an end, in a received signal sequence, comprising the steps of

   - detecting an amplitude of each received signal of the signal sequence and decision feedback equalization by
   - establishing a compensated signal by subtracting an amplitudevalue of a previous received signal of said signal sequence from the amplitude of a currently received signal of said signal sequence, and
   - making a decision whether a value of the currently received signal of said signal sequence is a high or low bit value according to the amplitude of said compensated signal,

   **characterised in that**
   the amplitude of the compensated signal is identified as being an undershot or overshot amplitude and the beginning of the errored bit sequence is identified as a received signal, whose compensated signal is having an undershot amplitude and the end of the errored bit sequence is identified as a received signal, whose compensated signal is having an overshot amplitude.

2. The method according to claim 1, **characterised in that** the identifying of the amplitude of the compensated signal as being an undershot or overshot amplitude is done by comparing the amplitude to at least one, preferably adjustable, threshold.

3. The method according to claim 1, **characterised in that** the said received signal sequence is comprising optical signals.

4. A method for mitigating a distorted optical signal, **characterised in that** after the steps of claim 3 have been performed, the errored bit sequence is replaced by a corrected bit sequence, wherein the corrected bit sequence is optained by inverting the errored bit sequence.

5. The method according to claim 4, **characterised in that** the method is used in high speed data processing.

6. A decision feedback equalizer for identifying an errored bit sequence, having a beginning and an end, in a received signal sequence, comprising

   - detection means, designed to detect an amplitude of each received signal of the signal sequence and
   - decision feedback equalization means, comprising

     - subtracting means, being designed to establish a compensated signal by subtracting an amplitudevalue of a previous received signal of said signal sequence from the amplitude of a currently received signal of said signal sequence, and
     - decision means, being designed to make a decision whether a value of the currently received signal of said signal sequence is a high or low bit value according to the amplitude of said compensated signal,

   **characterised in that**
   postprocessing means are provided, comprising

   - amplitude identifying means, being designed to identify the amplitude of the compensated signal as being an undershot or overshot amplitude and
   - errored bit sequence identifying means, being designed to identify the beginning of the errored bit sequence as a received signal, whose compensated signal is having an undershot amplitude and the end of the errored bit sequence as a received signal, whose compensated signal is having an overshot amplitude.

7. A decision feedback equalizer according to claim 6, **characterised in that** the postprocessing means are comprising mitigating means, comprising replacing means being designed to replace the errored bit sequence by a corrected bit sequence, and inverting means, being designed to establish the corrected bit sequence by inverting the errored bit sequence.

8. A decision feedback equalizer according to claim 6, **characterised in that** the amplitude identifying means are comprising means designed to provide information on the received signal, preferably a monitor flipflop.

9. A decision feedback equalizer according to claim 7, **characterised in that** the replacing means are comprising delay circuits.

10. A decision feedback equalizer comprising a microcomputer loaded with a computer program with software code sections by which the steps of the method according to claim 1 are carried out.

**Fig. 1**

**Fig. 2**

Fig. 3a

**Fig. 3b**

Fig. 3c State of the Art

IN

×

+

FF

0

Fig. 3d

Fig. 3e

EP 1 587 265 A1

Fig. 3f

Fig. 3g

Fig. 3h

EP 1 587 265 A1

**European Patent Office**

## EUROPEAN SEARCH REPORT

Application Number

EP 04 36 0002

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ROSE, LANGFORD: "Robust decision feedback equalisation using error propagation detection" INFORMATION, DECISION AND CONTROL. DATA AND INFORMATION FUSION SYMPOSIUM; SIGNAL PROCESSING AND COMMUNICATIONS SYMPOSIUM; AND DECISION AND CONTROL SYMPOSIUM, 8 February 1999 (1999-02-08), pages 309-314, XP002323569 NEW YORK, US * abstract * * page 310, right-hand column * | 1,6 | H04L25/03 |
| A | | 2-5,7-10 | |
| A | FANG ZHAO ET AL.: "Techniques for minimizing error propagation in decision feedback detectors for recording channels" IEEE TRANSACTIONS ON MAGNETICS, vol. 37, no. 1, January 2001 (2001-01), pages 592-602, XP002323570 NEW YORK, US * abstract * * page 593, left-hand column, paragraph 2 * * Section III * | 1-10 | |
| A | JIAN LIU ET AL.: "An analysis of decision feedback detection of differentially encoded MPSK signals" IEEE TRANSACTIONS ON VEHICULAR TECHNOLOGY, vol. 44, no. 2, May 1995 (1995-05), pages 261-267, XP002323571 NEW YORK, US * Section IV * | 1-10 | TECHNICAL FIELDS SEARCHED (Int.Cl.7) H04L |
| A | US 2001/016926 A1 (RIGGLE) 23 August 2001 (2001-08-23) * paragraph [0041] * | 1-10 | |

-/--

The present search report has been drawn up for all claims

| Place of search | Date of completion of the search | Examiner |
|---|---|---|
| The Hague | 6 April 2005 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 587 265 A1**

**European Patent Office**

**EUROPEAN SEARCH REPORT**

Application Number

EP 04 36 0002

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 604 221 B1 (HIROAKI UENO) 5 August 2003 (2003-08-05) * figure 1 * * column 3, line 36 - line 39 * ----- | 1-10 | |
| A | KENNEDY ET AL.: "Channels leading to rapid error recovery for decision feedback equalizers" IEEE TRANSACTIONS ON COMMUNICATIONS, vol. 37, no. 11, 1 November 1989 (1989-11-01), pages 1126-1135, XP000074535 NEW YORK, US * abstract * ----- | 1-10 | |

TECHNICAL FIELDS SEARCHED (Int.Cl.7)

The present search report has been drawn up for all claims

| Place of search | Date of completion of the search | Examiner |
|---|---|---|
| The Hague | 6 April 2005 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 587 265 A1

## ANNEX TO THE EUROPEAN SEARCH REPORT
## ON EUROPEAN PATENT APPLICATION NO.

EP 04 36 0002

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2005

| Patent document cited in search report | | Publication date | Patent family member(s) | | Publication date |
|---|---|---|---|---|---|
| US 2001016926 | A1 | 23-08-2001 | US | 6185716 B1 | 06-02-2001 |
| US 6604221 | B1 | 05-08-2003 | WO | 9939334 A1 | 05-08-1999 |

EPO FORM P0459

For more details about this annex : see Official Journal of the European Patent Office, No. 12/82

22